# EUROPEAN PATENT SPECIFICATION

(11) **EP 1 187 680 B1**
(45) Date of publication and mention of the grant of the patent: **15.09.2004**
(21) Application number: 99930171.6
(22) Date of filing: 25.06.1999
(51) Int. Cl.: B01L 11/00

(54) **UNIVERSAL WASHING APPARATUS FOR MICROTITER PLATE AND THE LIKE**
UNIVERSELLE WASCHVORRICHTUNG FÜR MIKROTITERPLATTEN UND DERGLEICHEN
APPAREIL DE LAVAGE UNIVERSEL POUR PLAQUE DE MICROTITRAGE ET AUTRES ELEMENTS SIMILAIRES

(43) Date of publication of application: 20.03.2002
(73) Proprietor: Lionheart Technologies, Inc., Winooski, VT 05404-0998 (US)
(72) Inventor: KONTOROVICH, Michael, Bio-Tek Holdings, Inc., Winooski, VT 05404-0998 (US); TREFRY, Jonathan S., Bio-Tek Holdings, Inc., Winooski, VT 05404-0998 (US); VENDITTI, Daniel J., Jr., Bio-Tek Holdings, Inc., Winooski, VT 05404-0998 (US)
(74) Representative: Boakes, Jason Carrington
(86) International application number: PCT/US1999/012819
(87) International publication number: WO 2001/000324

(56) References cited:
- EP-A- 0 903 181
- WO-A-87/01616
- GB-A- 2 225 223

## Description

### BACKGROUND OF THE INVENTION

### Field of the Invention

This invention relates to a universal washing apparatus, and in particular a washing apparatus for use in washing wells provided in reaction containers such as wells of microtiter plates, microcups and the like containers designed to hold samples or reagents used for chemical, immunological and other reactions.

### Description of Related Art

Certain laboratory operations require the testing of small samples such as immuno assays which are carried out in an arrangement of microwells or wells having volumes of, for example, 50-300 microliters or less formed in microtiter plates, hereinafter referred to generically as well plates. An example of this type of laboratory operation is an enzyme linked immunosorbent assay or "ELISA" reaction which is performed for measuring antigens and/or antibodies.

Reactions of this type involve the adding and removing of liquid reagents within each well. At several stages of the reactions, the unbound liquid remaining in the wells must be removed and the inside of the wells must be washed by dispensing a wash solution such as water, a buffer solution, or other fluid in the wells using a gravity feed or a pump, and then evacuating the liquid under a vacuum.

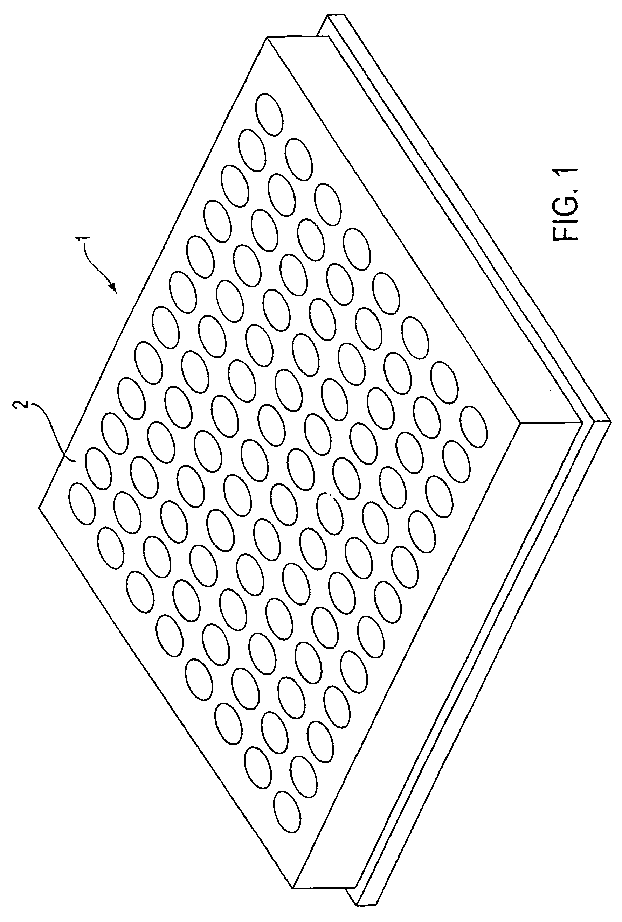

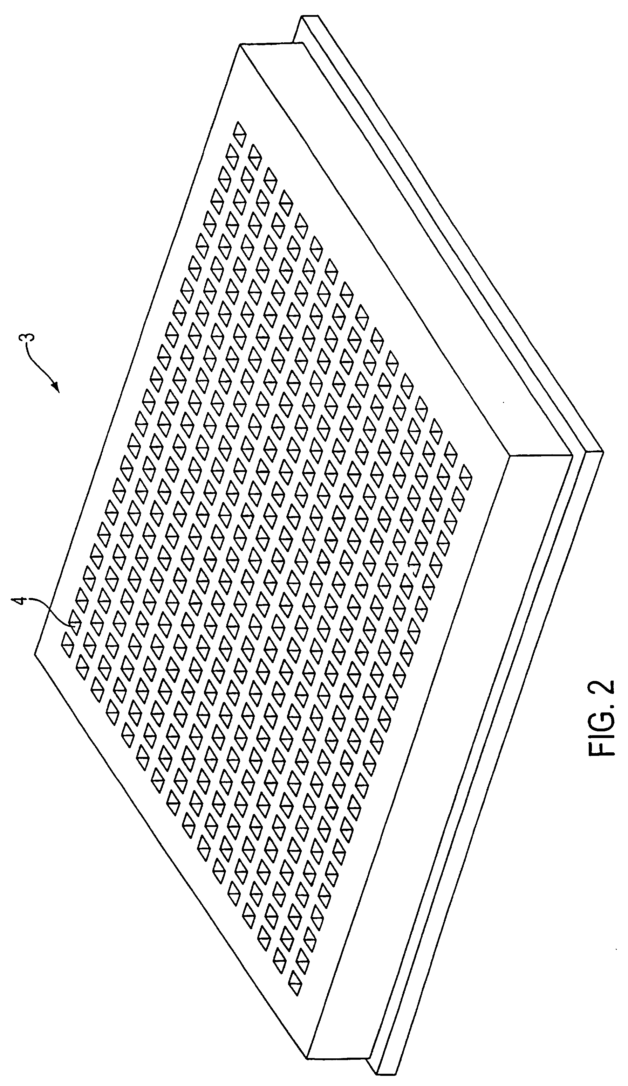

The wells can be arranged in a strip or in-line format, or can be arranged in a matrix format. Until recently, commonly used matrices were configured to have 8x12 wells spaced at 9 mm apart between centers, hereinafter referred to as a 96-well plate. Figure 1 illustrates a 96-well plate 1 having wells 2. However, with the advent of high throughput screening ("HTS"), two more matrixes were introduced which increased the total number of wells while keeping the overall size of the well plate the same: 1) the 384-well plate 3, as shown in Fig. 2, configured to have 16x24 wells 4 spaced at 4.5 mm apart between centers, and 2) the 1536-well plate configured to have 32x48 wells spaced at 2.25 mm apart between centers (not shown). Since the overall size of these new well plates are the same as the 96-well plate 1, the size of the wells in the new well plates is necessarily smaller than those in the 96-well plates while the depth of the wells remains the same.

A conventional washer used for removing the unbound contents in wells of a well plate includes dispense pipes for dispensing the wash solution into the wells of the well plate (e.g., by a pump or gravity feed), and aspirate pipes for evacuating the solution from the wells of the well plate (e.g., by a vacuum or a suction device). In order to quickly wash the well plates, the washing process is performed simultaneously on as many wells of the well plate as possible. A commercial example of such a washer is the SLT-LABINTRUMENTS 96PW washer.

Washers for cleaning the 96-well plate are well known. The conventional multi-well washing apparatuses of this type are constructed so that the dispense and aspirate pipes are connected to the same manifold body. When performing a wash operation, the wash solution enters the dispense portion of the manifold and gets channeled to the dispense pipes. Accordingly, the purpose of the dispense portion of the manifold is to distribute uniformly the incoming wash solution among the respective dispense pipes. The contents of the wells are then evacuated by the respective aspirate pipes into the aspirate portion of the manifold. Accordingly, the purpose of the aspirate portion of the manifold is to channel the wash solution from all the aspirate pipes into a common waste line.

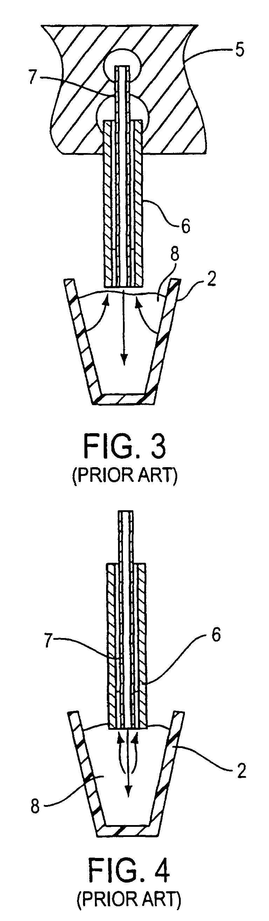

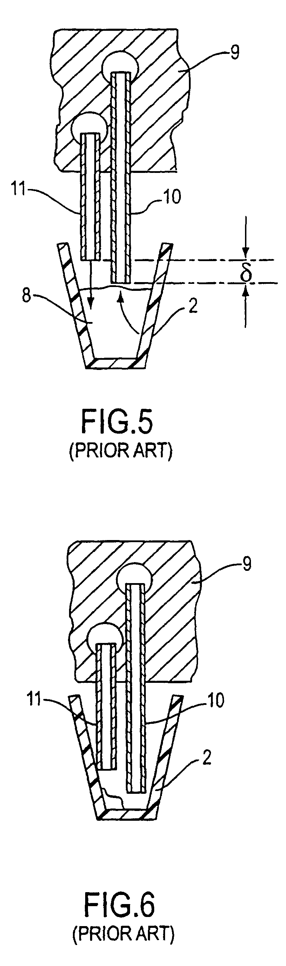

Conventional washing apparatuses generally fall into one of two configurations which define the arrangement of the dispense and aspirate pipes:
1. the pipe-within-a-pipe configuration, as disclosed in (U.S. patent 4,635,665) and further illustrated in Fig. 3, wherein the dispense pipe **7** is disposed inside the aspirate pipe **6** such that the tips of both pipes at their respective open ends are disposed approximately in the same horizontal plane; and
2. the pipe-next-to-pipe configuration as shown in Fig. 5 wherein the dispense pipe **11** is disposed adjacent to the aspirate pipe **10** so that both pipes fit within a single well **2**, and wherein the dispense pipe **11** is slightly shorter than aspirate pipe **10** by a distance δ (e.g., by 1-3 mm).

U.S. Patent Nos. 3,849,830; 4,015,942; 4,559,664; 4,685,480; 5,078,164; 5,105,842; 5,186,760; 5,264,042; and 5,636,647 are additional examples of washing apparatuses and are incorporated herein by reference.

GB 2,225,223 discloses an automated washing equipment for washing out a plurality of micro-wells in a micro-well plate. The micro-wells are filled with wash liquid, which is drained from the micro-wells by aspirating tubes that can be moved horizontally and vertically within the micro-wells in order to achieve more efficient drainage.

The foregoing two conventional washing apparatus configurations were created for use with the 96-well plate having 6 mm diameter wells. The pipe-within-a-pipe configuration has an outer pipe diameter of approximately 3.5 mm, and the pipe-next-topipe configuration has approximately 2.5 mm between pipe centers with each pipe being approximately 1 mm in diameter. Thus the overall dimension of the pair of pipes which enter a well during an evacuation process is less than the well diameter of a 96-well plate. However, the diameter of the wells in the new 384-well plate measures about 2.5 mm at the bottom of the well, and the diameter of the wells in the 1536-well plate is even smaller. Therefore, due to the smaller size wells, none of the conventional washing apparatus configurations described above can be used to evacuate the smaller wells of the 384- and 1536-well plates.

Next, different types of wash operations will be described with reference to the two conventional washing apparatus configurations described above.

An overflow wash operation occurs when the volume of wash solution dispensed into each well exceeds the capacity of the well and the excess wash solution is evacuated from the well by the aspirating pipe. Overflow washing is important when vigorous washing of the wells is required for successful removal of unbound material in the course of some reactions.

The two conventional washing apparatus configurations do allow for overflow washing of the standard large wells of the 96-well plates. However, as shown in Fig. 4, in the pipe-within-a-pipe configuration the overflow wash capability is limited due to the possibility of the suctioning off of the wash solution directly from the dispense pipe before the wash solution enters the well. This is particularly a problem when the dispense pipe dispenses the wash solution at low fluid delivery rates.

In the case of the pipe-next-to-pipe configuration as shown in Fig. 5, the overflow washing capability of large 96-well plates is improved due to the greater distance between the tips of dispense pipe **11** and aspirate pipe **10** which reduces the possibility of suctioning off the wash solution **8** before it is dispensed within the well **2**.

On the other hand, the pipe-within-a-pipe configuration, is capable of performing what is known in the industry as a "bottom sweep" evacuation wash operation wherein the aspirate pipe **6** is positioned sequentially in several areas of the large 96-well plate wells close to the side walls for efficient evacuation.

However, as shown in Fig. 6, the ability of the pipe-next-to-pipe configuration to perform an efficient evacuation or bottom sweep of the well is restricted because the dispense pipe **11** limits how close the aspirate pipe **10** can be positioned to the inner wall of the well **2**.

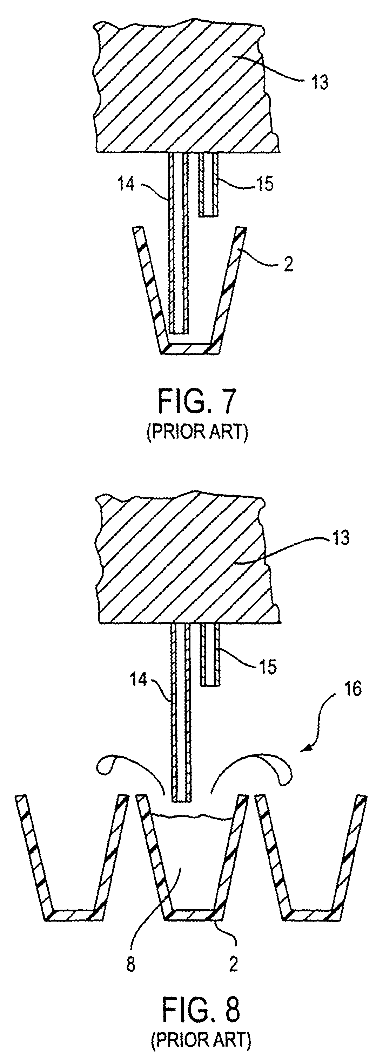

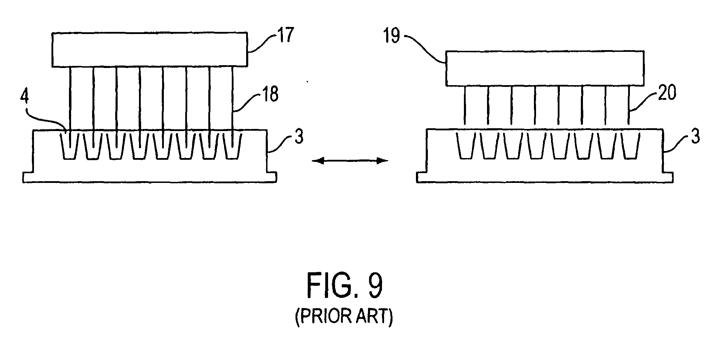

Attempts have been made to resolve the bottom sweep evacuation limitation of the pipe-next-to-pipe configuration. For example, as shown in Fig. 7, the dispense pipe **15** was made shorter than the aspiration pipe **14** by a distance slightly larger than the depth of the well **2**. However, as shown in Fig. 8, this resulted in considerable splashing of the liquid being dispensed from the increased height position relative to the well **2**, and the possible contamination of adjacent wells.

Thus, the foregoing conventional washers have limitations in washing conventional 96-well plates.

Furthermore, the recent introduction of the new well plates defined by larger matrices (i.e., the 384- and 1536-well plates) having narrower wells positioned closer to each other brought to light another limitation of the foregoing conventional washers. Namely, as noted above, the pipe-within-a-pipe and pipe-next-to-pipe configurations are adapted for washing relatively large diameter wells which are not available in the more recent well plates with the larger matrices. While the shortened dispense pipe **15** shown in Fig. 7 would permit the use of a conventional washer to aspirate the smaller size wells of the new well plates, the resulting splashing of liquid makes its use impractical since the contents of one well may splash into adjacent wells and contaminate them. Therefore, the conventional washers cannot be used with the newer well plates.

As shown in Fig. 9, one proposed solution that came to market for washing well plates having the new smaller well geometries is to provide a separate dispense manifold **19** having dispense pipes **20** and an aspirate manifold **17** having aspirate pipes **18** positioned in two separate locations next to each other. According to this design, the well plate **3** is first presented to the dispense manifold **19** for dispensing the wash solution, and, next, moved to the aspirate manifold **17** for the evacuation of the unbound contents in the wells **4**. One commercial example of such a washer is the SCATRON EMBLA 384 model. While the small aspirate pipes **18** of this split manifold design are able to fit into the smaller new wells **4**, the design can not be used to perform overflow washing of wells. Furthermore, the additional time required to move the well plate (or manifolds) between the dispense position and aspirate position is long, thereby reducing the efficiency of the washing operation. Moreover, the overall dimensions of an apparatus having this design is necessarily large.

Accordingly, the foregoing conventional apparatuses have one or more shortcomings in that they are not able to provide simultaneously within the same apparatus:
1. the ability to wash wells using an overflow wash operation for vigorously washing the wells,
2. the ability to place an evacuation pipe in any or multiple places within each well to effectively evacuate the contents of the wells, and
3. the ability to wash wells having a relatively small diameter such that only a single small aspirate pipe can be placed within the well such as those found in the newer well plates.

### SUMMARY OF THE INVENTION

It is, therefore, an object of the invention to provide a washing apparatus which is capable of eliminating the aforementioned drawbacks of known art washers.

Another object of the invention is to provide a washing apparatus that has the ability to wash wells with overflow for performing a vigorous wash operation.

Yet another object of the invention is to provide a washing apparatus that has the ability to place the aspiration pipes in any or multiple locations within the wells to effectively evacuate the contents of the wells.

A further object of the invention is to provide a washing apparatus that has the ability to wash wells having diameters large enough for only a single small diameter aspirate pipe to be placed in the wells such as in the case of a 384-well plate and a 1536-well plate.

Another object of the invention is to provide a washing apparatus that has the ability to effectively wash standard 96-well plates as well as the 384- and 1536-well plates.

Still another object of the invention is to provide a washing apparatus having dispense and aspirate pipes arranged over a well plate and which can be independently raised or lowered relative to the well plate.

Yet another object of the invention is to provide a washing apparatus having a separate dispense manifold with dispense pipes and a separate aspirate manifold with aspirate pipes, wherein the aspirate pipes pass through openings in the dispense manifold when lowered towards the well plate.

Yet another object of the invention is to provide a washing apparatus having a separate dispense manifold with dispense pipes and a separate aspirate manifold with aspirate pipes, wherein the dispense pipes pass through openings in the aspirate manifold when lowered towards the well plate.

Another object of the invention is to provide a washing apparatus wherein the dispense pipes can be disposed at an angle relative to the aspirate pipes.

Still another object of the invention is to provide a washer having an indexing mechanism for indexing the dispense pipes and aspirate pipes relative co a well plate.

A still further object of the invention is to provide a washing apparatus which includes a priming trough into which the dispense pipes and aspirate pipes may be lowered.

These and other objects are realized by the invention which provides a washing apparatus including:
a well plate support for supporting a well plate during a wash operation, a plurality of dispense pipes for dispensing a wash solution into the wells, a dispense. pipe support structure for supporting said dispense pipes, a plurality of aspirate pipes for evacuating the wash solution from the wells, an aspirate pipe support structure for supporting said aspirate pipes, and a guide mechanism for changing relative horizontal and vertical distances between said dispense pipes and said aspirate pipes and between said dispense pipes and said well plate support; said mechanism for changing relative horizontal and vertical distances further being operable, during the wash operation, for simultaneously positioning said dispense pipe support structure and said aspirate pipe support structure over the well plate support so that one of said dispense pipe support structure and said aspirate pipe support structure, defining a top pipe support structure, is positioned on top of the other of said dispense pipe support structure and said aspirate pipe support structure, defining a bottom pipe support structure.

### BRIEF DESCRIPTION OF THE DRAWINGS

The above and other objects of the present invention can be better understood with reference to the following detailed description of the specific embodiments when considered in combination with the drawings that form part of the specification, wherein:
Fig. 1 is a perspective view of a known 96-well plate.
Fig. 2 is a perspective view of a known 384-well plate.
Fig. 3 is a cross-sectional view of dispense and aspirate pipes illustrating an- overflow wash operation using the conventional pipe-within-a-pipe configuration.
Fig. 4 is a cross-sectional view of dispense and aspirate pipes illustrating a problem related to the operation of the conventional pipe-within-a-pipe configuration.
Fig. 5 is a cross-sectional view of dispense and aspirate pipes illustrating an overflow wash operation using the conventional pipe-next-to-pipe manifold configuration.
Fig. 6 is a cross-sectional view of dispense and aspirate pipes illustrating a problem related to the operation of the conventional pipe-next-to-pipe configuration.
Fig. 7 is a cross-sectional view of dispense and aspirate pipes illustrating a "bottom sweep" operation in the case of a conventional washing apparatus having a shortened dispense pipe.
Fig. 8 is a cross-sectional view of dispense and aspirate pipes illustrating a problem related to the wash operation using a conventional washing apparatus having a shortened dispense pipe.
Fig. 9 is a cross-sectional view of a conventional two manifold arrangement for washing small diameter wells.
Figs. 10A-10H are side and perspective views of a proposed split manifold arrangement showing various structures for supporting and moving the manifolds and support plate.
Fig. 11 is a cross-sectional view of dispense and aspirate pipes illustrating a dispense with overflow wash operation using a tilted dispense pipe in accordance with an embodiment of the invention.
Fig. 12A is a cross-sectional view of dispense and aspirate pipes illustrating an evacuation with overflow wash operation using a tilted dispense pipe in accordance with an embodiment of the invention.
Fig. 12B is a cross-sectional view of dispense and aspirate pipes wherein the dispense pipe is rotatably coupled to the manifold.
Fig. 12C is a cross-sectional view of dispense and aspirate pipes illustrating a narrow distal end of a pipe.
Fig. 12D is a cross-sectional view of dispense and aspirate pipes illustrating a large distal end of a pipe.
Fig. 13. is a cross-sectional view of dispense and aspirate pipes illustrating a dispense with overflow wash operation using straight pipes in accordance with an embodiment of the invention.
Fig. 14. is a cross-sectional view of dispense and aspirate pipes illustrating a bottom wash operation with straight pipes in accordance with an embodiment of the invention.
Fig. 15 is a cross-sectional view of dispense and aspirate pipes illustrating a "bottom sweep" evacuation wash operation of larger wells in accordance with an embodiment of the invention.
Fig. 16. is a top view of a well plate outline illustrating the relationship between an 8x12 and a 16x24 matrix well plates which allows using an 8x12 pipe configuration to wash 16x24 well plates.
Fig. 17 is a schematic view of a washing apparatus of a preferred embodiment of the invention.
Figs. 18-20 are flow charts showing an operation of the washer.

### DESCRIPTION OF THE PREFERRED EMBODIMENT

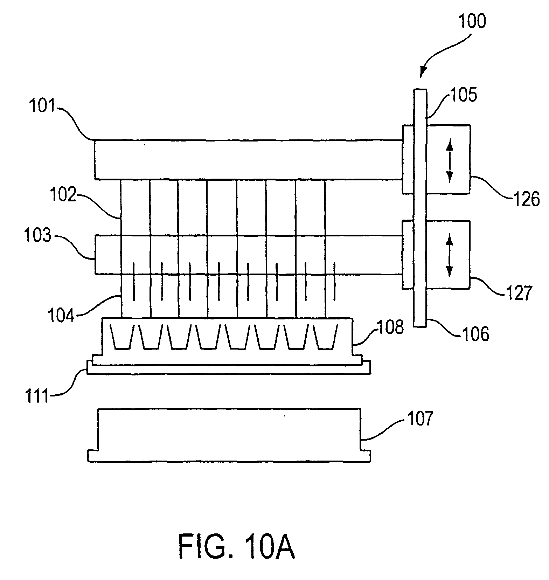

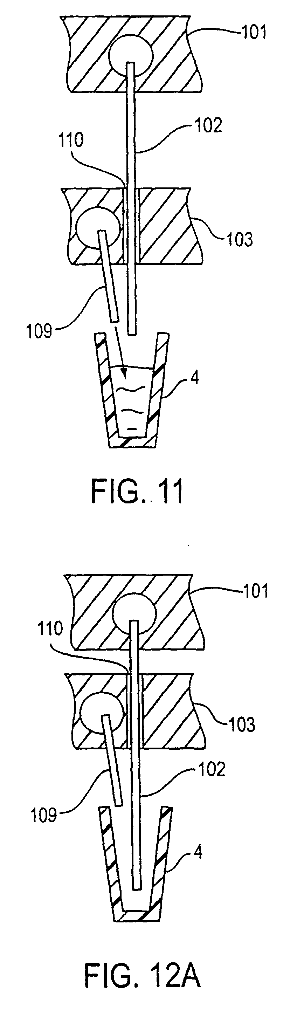

Fig. 10A shows a washing apparatus **100** including a top manifold **101** (e.g., an aspirate manifold), having a set of pipes **102** connected thereto, and a bottom or lower manifold **103** (e.g., a dispense manifold), having a set of pipes **104** connected thereto. As shown in Fig. 10A, the top and bottom manifolds are two physically different parts arranged on top of each other. The bottom manifold **103** is constructed in such a manner as to allow the pipes **102** from the top manifold to pass through the bottom manifold and enter the respective wells of the well plate **108** supported below both manifolds. One way to accomplish this is to drill holes or passages **110** (see Fig. 11) in the bottom manifold **103** next to each pipe in the bottom manifold corresponding to the arrangement of pipes in the top manifold **102**. Accordingly, the pipes in the top manifold **102** can pass through the holes **110** in order to reach the wells of the well plate **108**. Alternatively, the bottom manifold **103** can have openings or slots that permit the pipes from the top manifold to reach into the wells.

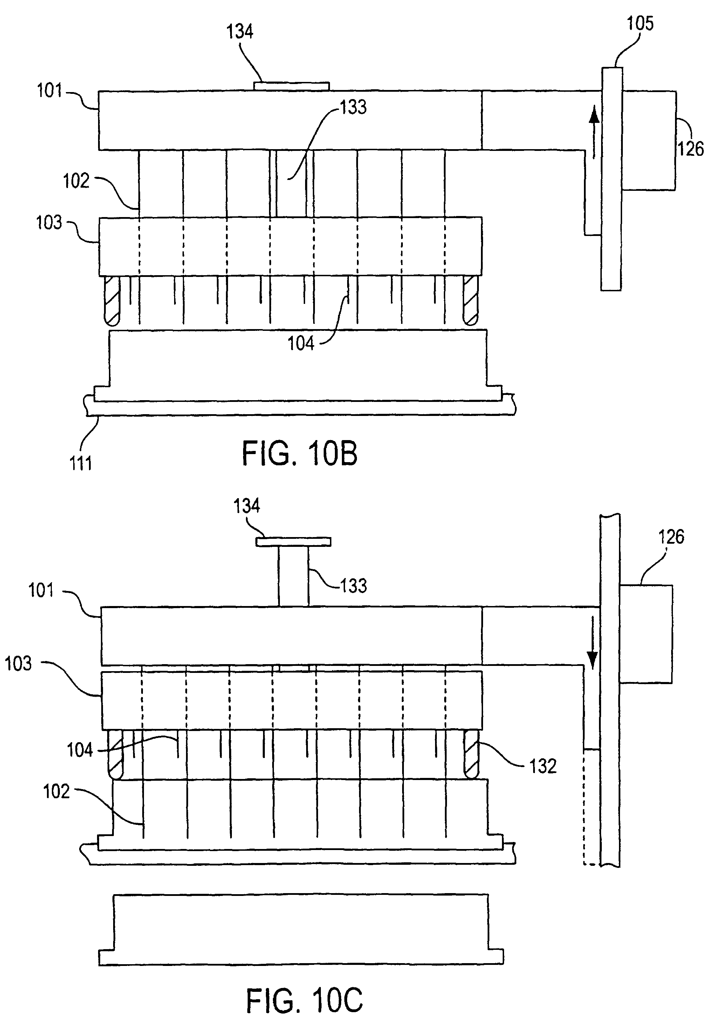

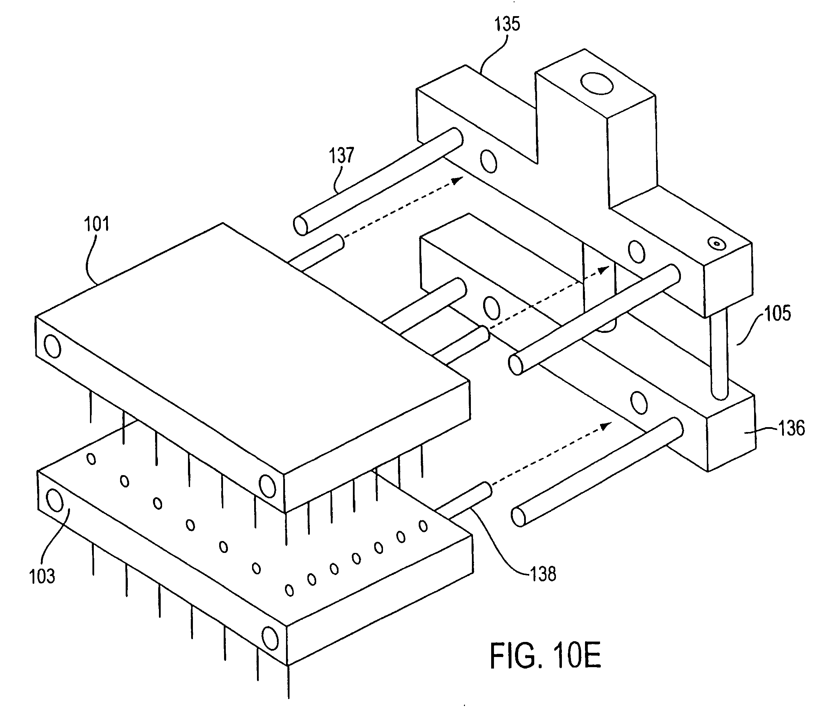

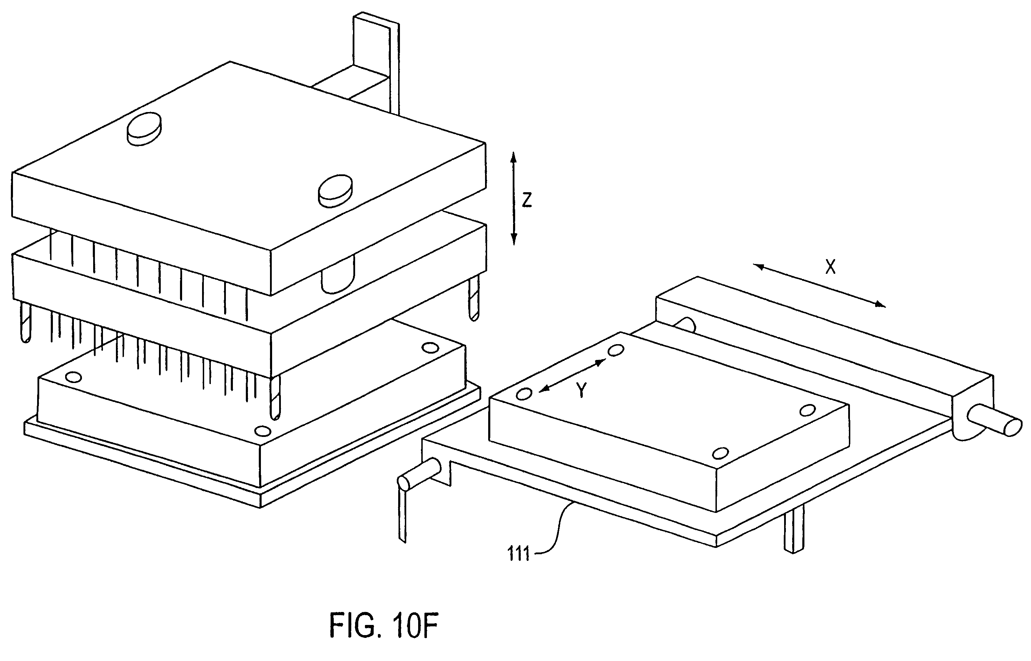

The top manifold **101** is supported by a vertical linear guide 105 which is driven by a first drive unit **126** for guiding the top manifold along the path of the linear guide **105**. Similarly, the bottom manifold **103** is supported by a vertical linear guide **106** which is driven by a second drive unit **127** for guiding the boctom manifold along the path of the linear guide **106**. Accordingly, the top and bottom manifolds can be lowered or raised independently of one another. Figures 10B-10E provide examples of a variety of other structures which may be employed to support the manifolds and permit their independent movement. As shown in Figs. 10B-10D, the bottom manifold moves along a guide **133** fixed to the top manifold. In this case, a stop **132** limits the downward movement of the bottom manifold. Fig. 10E illustrates the a support structure having an upper support bracket **135** for supporting the top manifold **101** and a lower support bracket **136** for supporting the bottom manifold **103**, and which uses rods **137** for coupling the manifolds to the support structures as well as tubing **138** for providing liquid conduits to and from the manifolds.

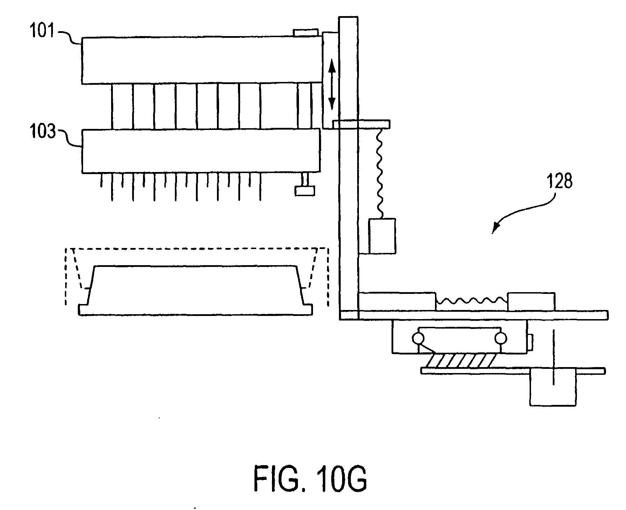

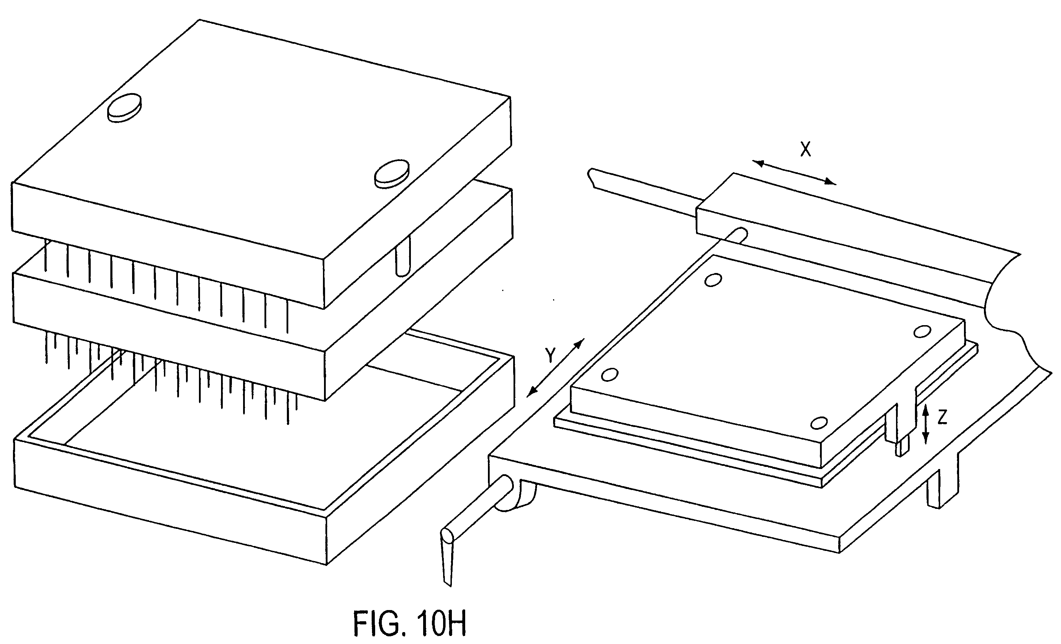

The well plate support mechanism or carrier **111**, as shown in Fig. 10F supports the well plate **108**, and is capable of indexing the well plate in the horizontal plane for performing wash operations with various well plate designs as will be explained below. Alternatively, as shown in Fig. 10G, the dispense and aspirate manifolds can include respective guides and driving mechanisms **128** for indexing the manifolds in the horizontal plane. It is understood, however, that an important feature of the invention is to have relative movement between the top manifold, bottom manifold, and carrier in both the vertical and horizontal directions; and that a variety of combinations defining which components to move and which components to leave stationary can be employed to achieve the desired relative movement. For example, Fig. 10H illustrates the case in which the carrier support is operable to be moved in both the horizontal and vertical directions. Accordingly, only one of the top and bottom manifolds will need to be movable in the vertical direction to achieve the required relative movement.

Finally, as shown in Figs. 10C and 10F a priming trough or plate is provided below the well plate support, and contains a solution into which the dispense and aspirate pipes can be lowered for priming the pipes and preventing build-up of salt crystallization as explained below.

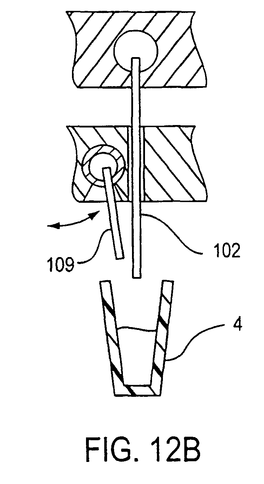

In an embodiment as shown in Figs. 11-12A, in order for the dispense pipe to be able to dispense a wash solution into a small well **4** associated with the newer well plates while the aspirate pipe **102** evacuates fluid from the same well as in the case of an overflow wash operation, a dispense pipe **109** can be used which is tilted from vertical so that the wash solution is jettisoned out at an angle and enters the well while the aspirate pipe **102** is positioned to aspirate the excess wash solution. The tilted dispense pipe **109** also results in a desirable swirling motion of the wash solution that enters the well and thus assures more vigorous washing if required. The titled dispense pipe can be either fixed to the manifold at a permanent angle, or as illustrated in Fig. 12B, can be rotatably coupled to the manifold.

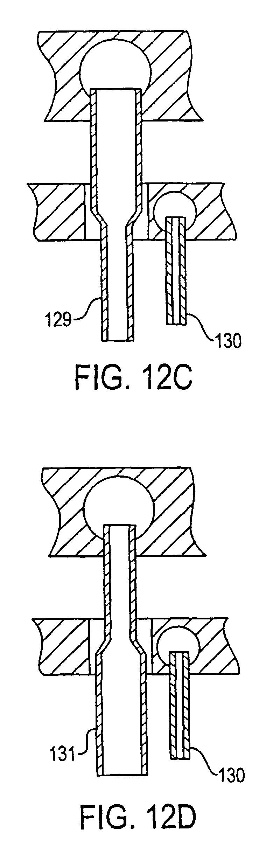

The ability to move or index the well plate **108** relative to the manifolds in the horizontal plane allows the aspirate pipes to be positioned close to the rim and thus permits the wash solution from the dispense pipes to enter the well. As shown in Fig. 12A, during the evacuation cycle the aspirate pipe **102** can be centered in the small well **4**, and allowed to enter the well and evacuate it without touching the walls. Furthermore, as shown in Fig. 12C, the aspirate pipe **129** can be narrowed so as to have a reduced diameter at its lower end over a length slightly longer than the depth of the well. This would assure that the aspirate pipe fits into the smallest well possible. Similarly, the dispense pipe **130** can be narrowed so as to have a reduced diameter at its lower end over a length slightly longer than the depth of the well in order to permit its entry into the smaller wells. Alternatively, as shown in Fig. 12D, the aspirate pipe **131** can be made to have an enlarged diameter at its distal end so that the wash solution may be gently aspirated into the pipes.

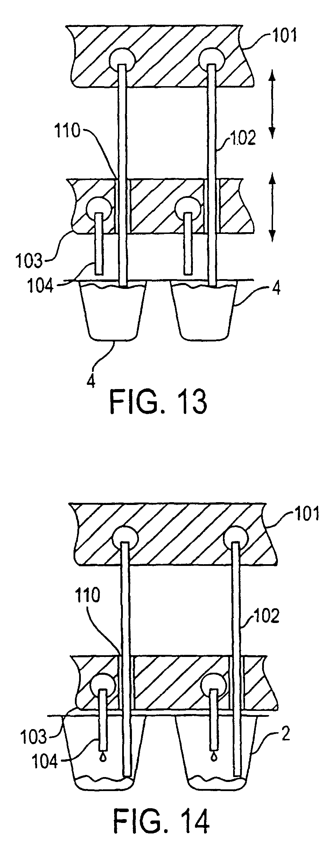

As described above, the aspirate and dispense manifolds are independently movable with respect to each other in the vertical direction. Thus, as shown in Fig. 13, both aspirate pipes **102** and dispense pipes **104** can be positioned at the rim of the well for performing an overflow wash operation. Alternatively, as shown in Fig. 14, both aspirate pipes **102** and dispense pipes **104** can be lowered into a well **2** having a larger diameter such as a well of the 96-well plate for effectively carrying out a bottom wash operation.

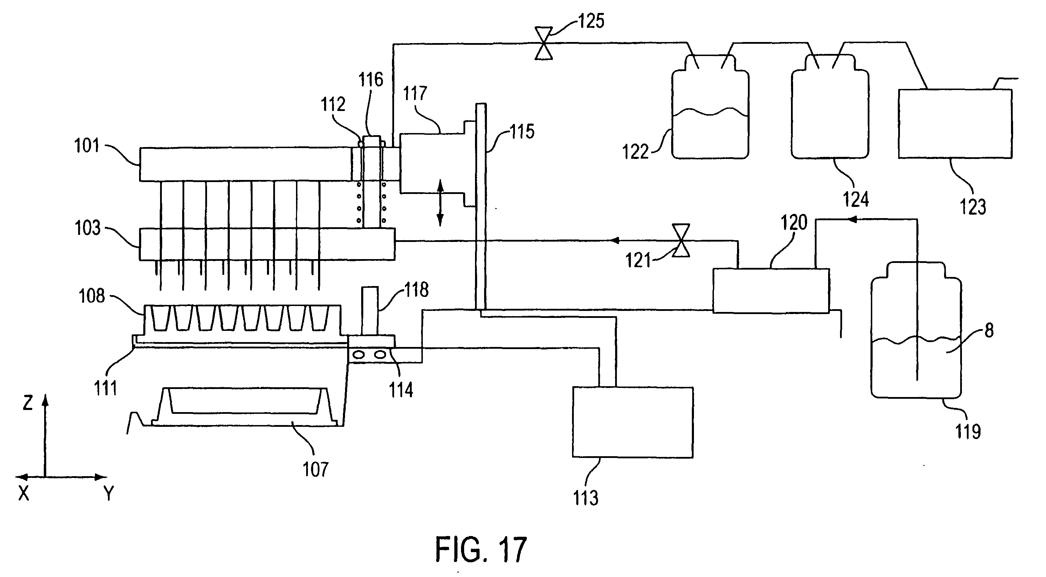

In another embodiment, the movement of one manifold can be slaved to that of the other manifold. For example, as shown in Fig. 17, the dispense manifold **103** can be slaved to the movement of the aspirate manifold **101** so that the dispense manifold stops automatically by a mechanical stop **118** during its downward movement so that only the aspirate pipes **102** enter the wells.

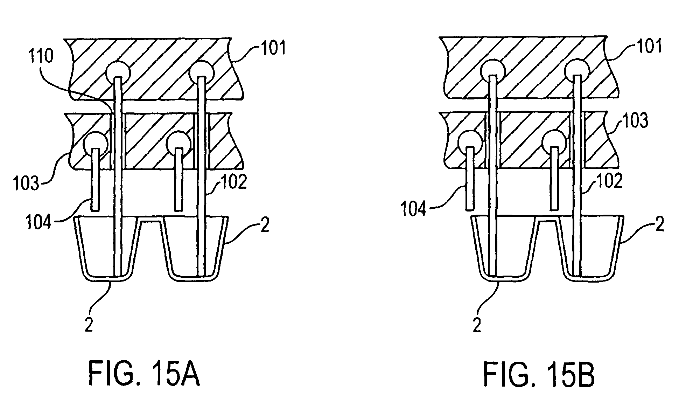

The relative horizontal movement of the manifolds and well plate that is required to wash plates of different well plate designs using the same set of manifolds can also be used to advantageously position the aspirate pipes in the well. For example, as shown in Fig. 15, the wells can be evacuated by sequentially moving the aspirate pipes **102** to several positions within the respective wells **2**, or complex relative motions can be performed such as circumferential sweep of the bottom of the well to achieve a "bottom sweep" wash operation.

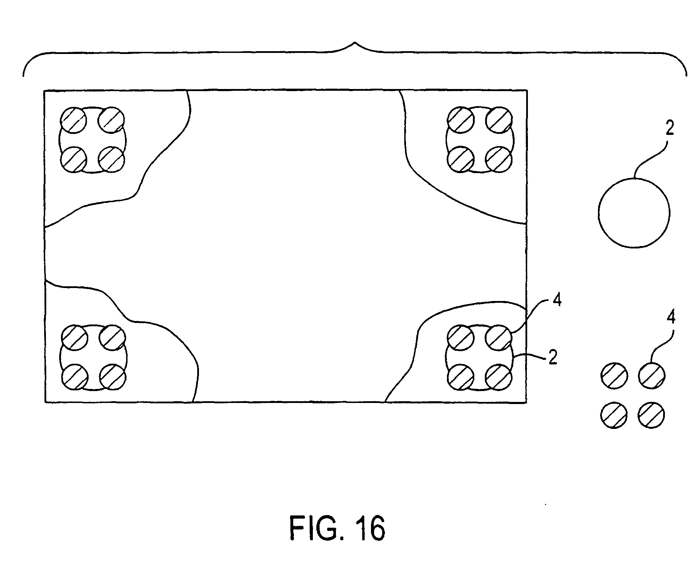

In another embodiment of the invention, as shown in Fig. 16, the aspirate and dispense pipes can be arranged in a horizontal plane corresponding to an 8x12 well matrix having wells 2 spaced approximately 9 mm between centers (i.e., the matrix of a conventional 96-well plate). This arrangement of pipes can also be used for washing 384-well plates that have a 16x24 matrix with wells **4** spaced approximately 4.5 mm between centers by indexing the well place relative to the manifold in the horizontal plane in an X-Y pattern 4 times to wash all the wells. Similarly, the arrangement can also be used for washing 1536-well plates that have a 32x48 matrix with wells spaced approximately 2.25 mm between center by indexing the well plate relative to manifold in the horizontal plane in an X-Y pattern 8 times to wash all the wells.

Alternatively, if a higher speed for washing a well plate is desired, a different piping matrix can be constructed having dispense and aspirate pipes spaced approximately 4.5 mm between centers in a direction of a column of wells and 9.0 mm between centers in a direction of a row of wells so that one pipe of each manifold fits into each well of in a column of the 384-well plate and **2** pipes of each manifold fit simultaneously into each well of the 96-well plate. Accordingly, only one indexing operation will be required to wash all 384 wells of a 384-well plate. Of course, other pipe matrix configurations may be used, the only limitation being the cost and practicality of increasing the number of pipes per manifold.

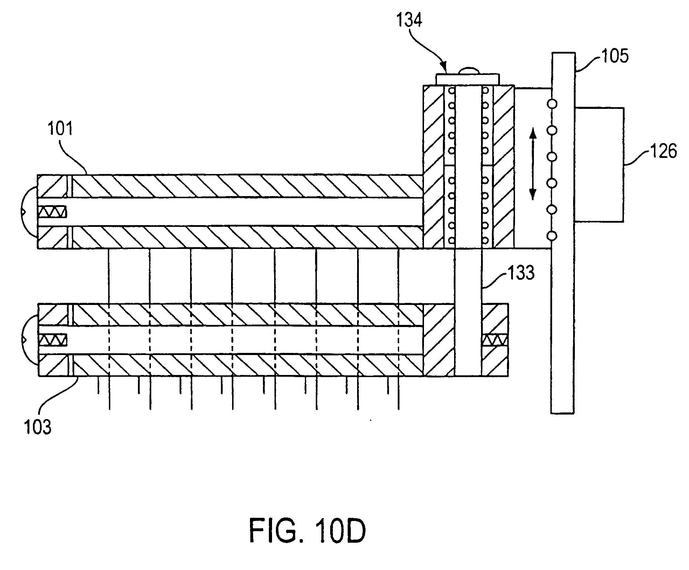

The above embodiment directed to moving the manifolds in the vertical and horizontal direction relative to a well place can also be used with the priming trough **107** positioned below the well plate support **111** as shown in Figs. 10 and 17. With the well plate support out of the way (i.e., when a wash operation is not being conducted) as shown in Fig. 10F, the dispense and aspirate manifolds can be automatically lowered so that end portions of the dispense and aspirate pipes are positioned in the trough for priming. This eliminates the need for the user to place a separate priming plate into the washing apparatus in the position of the well plate. The priming trough in accordance with the present invention can also be used to permit automatic periodic re-priming of the washer to prevent the pipes from drying out and to prevent salt crystallization inside the pipes.

It should be noted that the vertical movements of the manifolds described above is not limited to movement along a path perpendicular to the horizontal plane of the well plate or well plate support. Some well plates are made by injection molding wherein the inner walls of the wells are tilted from vertical by the mold draft angle. It may be advantageous, therefore, to lower the pipes into the well along the same or similar angle. The movement along a path slightly deviated from vertical is permissible and can be achieved by any known method since the method of implementation is not critical to the present invention.

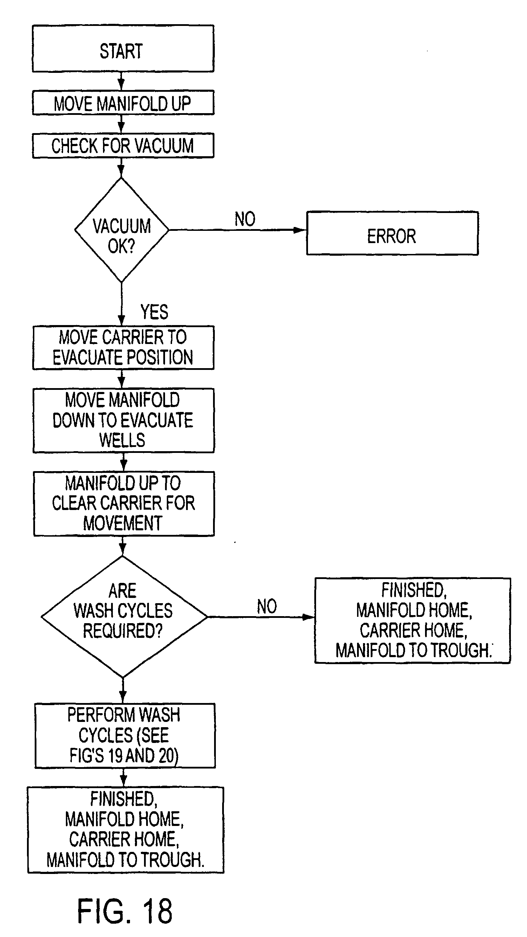

Fig. 17 provides a schematic of a complete washing apparatus built on the basis of the split top/bottom dispense and aspirate manifolds. Figs. 18-20 provide a flow chart illustrating an example of the a control operation for the washer.

The well plate **108** is positioned on the well plate support mechanism or carrier **111** which in turn is moved into the washing position by the support mechanism positioning system **114** connected to the control unit **113**. The support mechanism positioning system is also used to index the support plate in the horizontal X-Y plane relative to the manifolds during a washing operation as required. Alternatively, a drive mechanism for moving the top manifold **101** and bottom manifold **103** in the X-Y plane can be used to achieve the desired relative motion during a wash operation.

The illustrated embodiment shows the bottom manifold **103** as the dispense manifold which is slaved to the top aspirate manifold **101**. The aspirate manifold **101** is lowered and raised along the linear guide way **115** along the z-axis by the driving mechanism **117** connected to the control mechanism **113**. The dispense manifold **103** is suspended from the aspirate manifold **101** by a linear guide **116** and stopped from descending beyond a predetermined position relative to top manifold by a first stop **112**. Furthermore, a second stop **118** is provided on the support mechanism **111** for preventing che dispense manifold **103** from entering into the small wells during a wash operation as the aspirate manifold **101** is lowered to evacuate the wells. Alternatively, second mechanical stops **132** can be formed on the bottom manifold as shown in Fig. 10B.

When the washing apparatus is idle (i.e., when a wash operation is not being performed), the support mechanism **111** and second stop **118** are moved out of the way and placed in a home position. The control unit **113** can then lower the top manifold and bottom manifold allowing their respective pipes to be lowered into the priming trough **107** so that the pipes may be primed or maintained in a liquid solution to prevent the formation of salt crystallization and the like.

The wash solution **8** is delivered into the dispense manifold from the source container **119** by means of a pump **120** and a valve **121**. The wash solution is removed from the aspirate manifold **101** into a waste container **122** which is separated from a vacuum pump **123** by a trap **124**. Opening valve **125** connects the aspirate manifold **101** to the waste container. It should be understood that any commonly known control mechanism can be used for controlling the dispensing of the wash solution independently from the evacuation of the wells. Furthermore, it is understood that any common method for delivering fluid to the dispense pipes and for evacuating fluid through the aspirate pipes can be used.

Therefore, the washing apparatus in accordance with the invention having separate dispense and aspirate manifolds which are independently movable along a vertical access and which are positioned one on top of the other is capable of performing wash operations on wells in a standard 96-well plate as well as those of the newer 384-well plate and 1536-well plate. Additionally, the washing apparatus in accordance with the invention is capable of performing a variety of wash operations such as a dispense with overflow wash operation and a bottom sweep wash operation.

Next, with reference to Figs. 18-20, the operation of a washing process will be explained using a washing apparatus having only the top manifold (e.g., aspirate manifold) driven in the vertical direction while the bottom manifold (e.g., dispense manifold) is slidably supported to the top manifold so that when the top manifold descends, the bottom manifold will descend until mechanical stops mounted to the bottom manifold prevent further movement of only the bottom manifold.

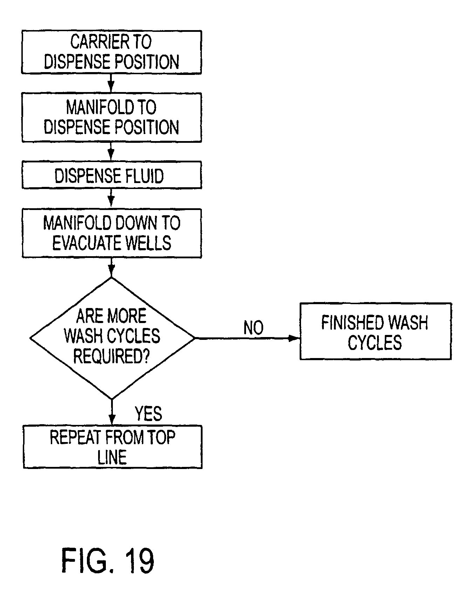

Referring to Fig. 18, the operation begins with the manifold in the upward position. Prior to evacuation of the wells, the vacuum is checked. Next, the top manifold is driven downward towards the well plate to evacuate the wells, after which the top manifold is raised to clear the carrier for movement. In the case when wash cycles are required to be performed for a 96-well plate, for example as shown in Fig. 19, the carrier is positioned below the manifolds and the top manifold is moved downward so as to bring the bottom manifold to a dispense position for dispensing fluid. Next, the top manifold can be further lowered to evacuate the wells while the bottom manifold remains in position by the mechanical stop. This cycle can be repeated if necessary.

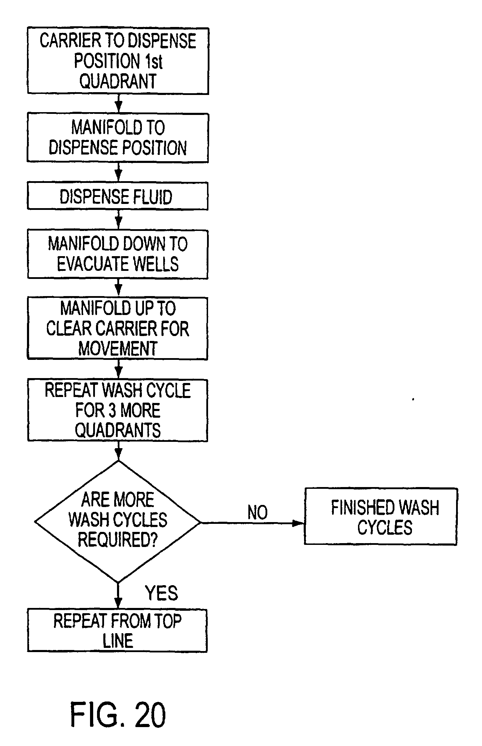

Figure 20 illustrates the case in which a 384-well plate is washed. In this case, the well-plate is washed in 4 quadrants. The carrier is initially positioned in the first quadrant and the dispense and aspirate steps are carried out as in the 96-well plate. Next, the cycle is repeated three times to complete a washing operation for all the wells by repositioning the carrier in each quadrant prior to performing the subsequent dispense and aspirate operations.

While the foregoing embodiments describe the invention as having independently movable top and bottom manifolds, it is understood that a washing apparatus in accordance with the present invention can include a single manifold body connected to dispense and aspirate pipes such that the dispense and aspirate pipes are independently movable in the vertical direction with respect to one another. For example, a washing apparatus having a single manifold body design may include dispense and aspirate pipes separately arranged and supported by respective plates or other pipe support structures which are independently movable in the vertical direction, and wherein the dispense and aspirate pipes are connected to the manifold body by flexible tubes.

Furthermore, while the foregoing embodiments described the invention as having a support mechanism which is capable of indexing the well plate in the X-Y plane, an alternative is to allow the manifolds themselves to be indexed in the X-Y plane to achieve the same results.

It is also understood that an important aspect of the present invention is to have the dispense and aspirate pipes arranged on top of one another so that the manifolds can be independently moved relative to the support mechanism for the well plate. Although this can be achieved by independently moving the dispense and aspirate manifolds along a vertical guide, an alternative possibility is to have only one of the manifolds movable along a vertical guide and to have the support mechanism for the well plate also movable along a vertical path, thereby achieving the desired relative movement.

## Claims

1. An apparatus for simultaneously washing a plurality of wells (2) in a well plate (108), comprising:
a well plate support (111) for supporting a removable well plate during a wash operation,
a plurality of dispense pipes (104) for dispensing a wash solution into the wells,
a dispense pipe support structure (103) for supporting said dispense pipes,
a plurality of aspirate pipes (102) for evacuating the wash solution from the wells,
an aspirate pipe support structure (101) for supporting said aspirate pipes, and **characterised by**,
a guide mechanism (128) arranged for, during the wash operation, simultaneously positioning said dispense pipe support-structure and said aspirate pipe support structure over the well plate support so that one of said dispense pipe support structure and said aspirate pipe support structure, defining a top pipe support structure, is positioned on top of the other of said dispense pipe support structure and said aspirate pipe support structure, said other defining a bottom pipe support structure; whereby
said guide mechanism is also arranged for providing, for said dispense pipes and said aspirate pipes relative to said well plate, horizontal movement in a first direction and a second direction angled with respect to the first direction in a horizontal plane, and vertical movement.

2. An apparatus as claimed in claim 1, wherein said guide member is also arranged so that said dispense pipes and said aspirate pipes can be independently raised and/or lowered with respect to said well plate.

3. An apparatus for simultaneously washing a plurality of wells in a well plate as claimed in claim 1 or claim 2, wherein said guide mechanism includes:
a first guide mechanism (105,126) operable for raising and lowering said dispense pipe support structure relative to said well plate support during the wash operation, and
a second guide mechanism (106,127) operable for raising and lowering said aspirate pipe support structure relative to said well plate support independent of said first guide mechanism during the wash operation.

4. An apparatus as claimed in claim 3, wherein said second guide mechanism is operable for raising and lowering said aspirate pipe structure independently of said dispense pipe structure.

5. An apparatus as claimed in claim 1, wherein said bottom support structure includes a plurality of openings (110) through which pipes connected to said top support structure pass when said top support structure is lowered with respect to said bottom support structure.

6. An apparatus for simultaneously washing a plurality of wells in a well plate as in claim 1, wherein said dispense pipes are disposed so as to enter the same respective wells as said aspirate pipes when said dispense pipes and said aspirate pipes are lowered towards the well plate.

7. An apparatus as claimed in claim 1, wherein said dispense pipe support structure is a dispense manifold and said aspirate support structure is an aspirate manifold and wherein a fluid delivery system is connected to said dispense manifold and a fluid evacuation system is connected to said aspirate manifold.

8. An apparatus as claimed in claim 7, wherein said guide member is also arranged so that said dispense manifold and said aspirate manifold are independently movable with respect to said well plate.

9. An apparatus for simultaneously washing a plurality of wells in a well plate as in claim 7, wherein said guide mechanism includes:
a first guide mechanism (105,126) for raising and lowering said dispense manifold relative to said well plate support, and
a second guide mechanism (106,127) for raising and lowering said aspirate manifold relative to said well plate support independent of said first guide mechanism.

10. An apparatus as claimed in claim 9, wherein said second guide mechanism is operable for raising and lowering said aspirate manifold independently of said dispense manifold.

11. An apparatus for simultaneously washing a plurality of wells (2) in a well plate (108) as in claim 9, wherein said first guide mechanism comprises a first vertical guide (105) and a first coupling member for coupling said top manifold to said first vertical guide, and wherein said second guide mechanism comprises a second vertical guide (106) and a second coupling member for coupling said bottom manifold to said second vertical guide, said second vertical guide being supported by said top manifold.

12. An apparatus for simultaneously washing a plurality of wells in a well plate as in claim 7, wherein said dispense manifold is the top manifold and said aspirate manifold is the bottom manifold.

13. An apparatus for simultaneously washing a plurality of wells in a well plate as in claim 7, wherein said aspirate manifold is the top manifold and said dispense manifold is the bottom manifold.

14. An apparatus for simultaneously washing a plurality of wells in a well plate as in claim 7, wherein said bottom manifold has a plurality of openings (110) through which pipes connected to said top manifold pass when said top manifold is lowered with respect to said bottom manifold.

15. An apparatus for simultaneously washing a plurality of wells in a well plate as in claim 14, wherein said pipes connected to said top manifold and passing through said bottom manifold are disposed so as to enter the same respective wells as the pipes connected to said bottom manifold when said top manifold and bottom manifold are lowered towards the well plate.

16. An apparatus for simultaneously washing a plurality of wells in a well plate as in claim 15, wherein end portions of at least one of said dispense pipes (130) and said aspirate pipes (129) entering the wells has a reduced diameter.

17. An apparatus for simultaneously washing a plurality of wells in a well plate as in claim 7, further comprising a control unit (113) for independently controlling the dispensing of the wash solution (8) from the evacuation of the wash solution from the wells.

18. An apparatus for simultaneously washing a plurality of wells in a well plate as in claim 7, wherein the raising and lowering of said bottom manifold is slaved to the raising and lowering of said top manifold and said apparatus further comprises a stop device (118) so that during a lowering of said top and bottom manifolds, said bottom manifold stops at a predetermined height set by the stop device while said top manifold may continue to descend.

19. An apparatus for simultaneously washing a plurality of wells in a well plate as in claim 7, wherein said dispense pipes (109) are disposed at an angle from vertical and the wash solution dispensed therefrom enters respective wells of the well plate while said aspirate pipes (102) simultaneously enter the respective wells of the well plate so as to perform a continuous overflow wash operation.

20. An apparatus for simultaneously washing a plurality of wells in a well plate as in claim 7, wherein said dispense pipes are disposed at an angle from vertical and the wash solution dispensed therefrom enters respective wells of the well plate while creating a swirling fluid motion.

21. An apparatus for simultaneously washing a plurality of wells in a well plate as in claim 19, wherein said dispense pipes are disposed at an angle from vertical and the wash solution dispensed therefrom is jettisoned so as to hit side walls of the respective wells of the well plate.

22. An apparatus for simultaneously washing a plurality of wells in a well plate as in claim 7, wherein end portions of said aspirate pipes (131) have an enlarged diameter, thereby permitting a gentle aspiration operation.

23. An apparatus for simultaneously washing a plurality of wells in a well plate as in claim 7, wherein said guide mechanism further comprises an indexing mechanism for indexing said dispense and aspirate pipes in the horizontal plane.

24. An apparatus for simultaneously washing a plurality of wells in a well plate as in claim 23, comprising 96 dispense pipes and 96 aspirate pipes configured for a 96-well plate, and wherein said indexing mechanism is disposed to index said dispense pipes and said aspirate pipes four times to perform a wash operation on a 384-well plate and 8 times to perform a wash operation on a 1536-well plate.

25. An apparatus for simultaneously washing a plurality of wells in a well plate as in claim 7, wherein said guide mechanism further comprises an indexing mechanism for indexing said well plate support in the horizontal plane.

26. An apparatus for simultaneously washing a plurality of wells in a well plate as in claim 25, wherein said indexing mechanism is disposed to index said well plate support four times to perform a wash operation on a 384-well plate and 8 times to perform a wash operation on a 1536-well plate.

27. An apparatus for simultaneously washing a plurality of wells in a well plate as in claim 7, further comprising a priming trough (107) into which said dispense pipes and said aspirate pipes may be lowered.

28. An apparatus for simultaneously washing a plurality of wells in a well plate as in claim 7, wherein said dispense pipes (104) are rotatably supported on said dispense manifold (103).

29. A method of simultaneously washing a plurality of wells (2) in a well plate (108) using a washing apparatus including a well plate support for supporting a removable well plate during a wash operation, a plurality of dispense pipes (104) for dispensing a wash solution into the wells, a dispense pipe support structure (103) for supporting said dispense pipes, a plurality of aspirate pipes (102) for evacuating the wash solution from the wells, and an aspirate pipe support structure (101) for supporting said aspirate pipes, **characterised by** the steps of:
simultaneously positioning said dispense pipe support structure and said aspirate pipe support structure over the well plate support so that one of said dispense pipe support structure and said aspirate pipe support structure, defining a top pipe support structure, is positioned on top of the other of said dispense pipe support structure and said aspirate pipe support structure, said other defining a bottom pipe support structure
vertically moving at least two of said top pipe support structure, bottom pipe structure, and well plate support so as to bring said dispense pipes near the wells for dispensing the wash solution (8) into respective wells of the well plate, and so as to bring said aspirate pipes respectively into the wells for evacuating the wash solution from the respective wells of the well plate; and
horizontally moving said dispense pipes and aspirate pipes, relative to said well plate, in a first direction and a second direction angled with respect to the first direction in a horizontal plane.

30. The method as claimed in claim 29, further comprising raising and/or lowering said aspirate pipes and said dispense pipes independently with respect to said well plate.

31. A method of simultaneously washing a plurality of wells in a well plate in accordance with claim 29, wherein said step of moving at least two of said top pipe support structure, bottom pipe structure, and well plate support, further includes passing said pipes supported by said top pipe support structure through said bottom pipe support structure.

32. A method of simultaneously washing a plurality of wells in a well plate in accordance with claim 29, further comprising the step of raising and lowering said top pipe support structure and said bottom pipe support structure, and stopping said bottom pipe support structure at a predetermined height set by a stop device (118) during a step of lowering said top pipe support structure and said bottom pipe support structure while said top pipe support structure continues to descend.

33. A method of simultaneously washing a plurality of wells in a well plate in accordance with claim 29, further comprising the step of dispensing the wash solution from said dispensing pipes so that the wash solution hits respective side walls of the well plates at an angle.

34. A method of simultaneously washing a plurality of wells in a well plate in accordance with claim 29, further comprising the steps of indexing in the horizontal plane said dispense pipe support structure and said aspirate pipe structure at least once so as to perform a wash operation on a well plate having a number of wells greater than a number of dispense pipes of the washing apparatus.

35. A method of simultaneously washing a plurality of wells in a well plate in accordance with claim 29, further comprising the steps of indexing in the horizontal plane said well plate support at least once so as to perform a wash operation on a well plate have a number of wells greater than a number of dispense pipes of the washing apparatus.

36. A method of simultaneously washing a plurality of wells in a well plate in accordance with claim 29, further comprising the steps of lowering said dispense pipes and said aspirate pipes into a priming trough (107).

## Patentansprüche

1. Vorrichtung zum gleichzeitigen Waschen einer Vielzahl von Näpfen (2) in einer Napfplatte (108), umfassend:
eine Napfplattenhalterung (111) zum Haltern einer abnehmbaren Napfplatte während eines Waschvorgangs,
eine Vielzahl von Abgaberohren (104) zur Abgabe einer Waschlösung in die Näpfe,
einen Abgaberohrhalterungsaufbau (103) zum Haltern der Abgaberohre,
eine Vielzahl von Saugrohren (102) zum Absaugen der Waschlösung aus den Näpfen,
einen Saugrohrhalterungsaufbau (101) zum Haltern der Saugrohre, und **gekennzeichnet durch**
eine Führungseinrichtung (128), die so eingerichtet ist, dass sie während des Waschvorgangs gleichzeitig den Abgaberohthalterungsaufbau und den Saugrohrhalterungsaufbau über der Napfplattenhalterung so positioniert, dass der Abgaberohrhalterungsaufbau oder der Saugrohrhalterungsaufbau, der einen oberen Rohrhalterungsaufbau bildet, über dem anderen Abgaberohrhalterungsaufbau oder Saugrohrhalterungsaufbau positioniert ist, wobei der andere einen unteren Rohrhalterungsaufbau bildet; wobei
die Führungseinrichtung auch dazu eingerichtet ist, für die Abgaberohre und die Saugrohre bezüglich der Napfplatte eine horizontale Bewegung in einer ersten Richtung und einer zweiten Richtung bereitzustellen, die sich im Hinblick auf die erste Richtung in einer horizontalen Ebene in einem Winkel befindet, und eine vertikale Bewegung.

2. Vorrichtung nach Anspruch 1, wobei das Führungsteil auch so eingerichtet ist, dass die Abgaberohre und die Saugrohre im Hinblick auf die Napfplatte unabhängig angehoben und/oder gesenkt werden können.

3. Vorrichtung zum gleichzeitigen Waschen einer Vielzahl von Näpfen in einer Napfplatte wie nach Anspruch 1 oder Anspruch 2, wobei die Führungseinrichrung umfasst:
eine erste Führungseinrichtung (105, 126), die betrieben werden kann, um den Abgaberohrhalterungsaufbau während des Waschvorgangs bezüglich der Napfplattenhalterung anzuheben und zu senken, und
eine zweite Führungseinrichtung (106, 127), die betrieben werden kann, um den Saugrohrhalterungsaufbau während des Waschvorgangs bezüglich der Napfplattenhalterung unabhängig von der ersten Führungseinrichtung anzuheben und zu senken.

4. Vorrichtung nach Anspruch 3, wobei die zweite Führungseinrichtung betrieben werden kann, um den Saugrohraufbau unabhängig vom Abgaberohraufbau anzuheben und zu senken.

5. Vorrichtung nach Anspruch 1, wobei der untere Halterungsaufbau eine Vielzahl von Öffnungen (110) umfasst, durch welche mit dem oberen Halterungsaufbau verbundene Rohre hindurchgehen, wenn der obere Halterungsaufbau im Hinblick auf den unteren Halterungsaufbau abgesenkt ist.

6. Vorrichtung zum gleichzeitigen Waschen einer Vielzahl von Näpfen in einer Napfplatte nach Anspruch 1, wobei die Abgaberohre so angeordnet sind, dass sie in dieselben jeweiligen Näpfe eintreten wie die Saugrohre, wenn die Abgaberohre und die Saugrohre zur Napfplatte hin abgesenkt sind.

7. Vorrichtung nach Anspruch 1, wobei der Abgaberohrhalterungsaufbau ein Abgabeverteiler und der Saugröhrhalterungsaufbau ein Saugverteiler ist, und wobei ein Fluidzufuhrsystem mit dem Abgabeverteiler verbunden und ein Fluidabzugssystem mit dem Saugverreiler verbunden ist.

8. Vorrichtung nach Anspruch 7, wobei das Führungsteil auch so eingerichtet ist, dass der Abgabeverteiler und der Saugverteiler im Hinblick auf die Napfplatte unabhängig bewegbar sind.

9. Vorrichtung zum gleichzeitigen Waschen einer Vielzahl von Näpfen in einer Napfplatte wie nach Anspruch 7, wobei die Führungseinrichtung umfasst:
eine erste Führungseinrichtung (105, 126) zum Anheben und Senken des Abgabcverteilers bezüglich der Napfplattenhalterung, und
eine zweite Führungseinrichtung (106, 127) zum Anheben und Senken des Saugverteilers bezüglich der Napfplattenhalterung unabhängig von der ersten Führungseinrichtung.

10. Vorrichtung nach Anspruch 9, wobei die zweite Führungseinrichtung betrieben werden kann, um den Saugverteiler unabhängig vom Abgabeverteiler anzuheben und zu senken.

11. Vorrichtung zum gleichzeitigen Waschen einer Vielzahl von Näpfen (2) in einer Napfplatte (108) wie nach Anspruch 9, wobei die erste Führungseinrichtung eine erste vertikale Führung (105) und ein erstes Kupplungsteil umfasst, um den oberen Verteiler mit der ersten vertikalen Führung zu verbinden, und wobei die zweite Führungseinrichtung eine zweite vertikale Führung (106) und ein zweites Kupplungsteil umfasst, um den unteren Verteiler mit der zweiten vertikalen Führung zu verbinden, wobei die zweite vertikale Führung vom oberen Verteiler gehaltert ist.

12. Vorrichtung zum gleichzeitigen Waschen einer Vielzahl von Näpfen in einer Napfplatte wie nach Anspruch 7, wobei der Abgabeverteiler der obere Verteiler und der Saugverteiler der untere Verteiler ist.

13. Vorrichtung zum gleichzeitigen Waschen einer Vielzahl von Näpfen in einer Napfplatte wie nach Anspruch 7, wobei der Saugverteiler der obere Verteiler und der Abgabeverteiler der untere Verteiler ist.

14. Vorrichtung zum gleichzeitigen Waschen einer Vielzahl von Näpfen in einer Napfplatte wie nach Anspruch 7, wobei der untere Verteiler eine Vielzahl von Öffnungen (110) hat, durch welche mit dem oberen Verteiler verbundene Rohre hindurchgehen, wenn der obere Verteiler im Hinblick auf den unteren Verteiler abgesenkt ist.

15. Vorrichtung zum gleichzeitigen Waschen einer Vielzahl von Näpfen in einer Napfplatte wie nach Anspruch 14, wobei die mit dem oberen Verteiler verbundenen und durch den unteren Verteiler hindurchgehenden Rohre so angeordnet sind, dass sie in dieselben jeweiligen Näpfe eintreten wie die mit dem unteren Verteiler verbundenen Rohre, wenn der obere Verteiler und der untere Verteiler zur Napfplatte hin abgesenkt sind.

16. Vorrichtung zum gleichzeitigen Waschen einer Vielzahl von Näpfen in einer Napfplatte wie nach Anspruch 15, wobei in die Näpfe eintretende Endabschnitte wenigstens eines der Abgaberohre (130) und Saugrohre (129) einen reduzierren Durchmesser haben.

17. Vorrichtung zum gleichzeitigen Waschen einer Vielzahl von Näpfen in einer Napfplatte wie nach Anspruch 7, darüber hinaus eine Steuereinheit (113) umfassend, um die Abgabe der Waschlösung (8) vom Absaugen der Waschlösung aus den Näpfen unabhängig zu steuern.

18. Vorrichtung zum gleichzeitigen Waschen einer Vielzahl von Näpfen in einer Napfplatte wie nach Anspruch 7, wobei das Anheben und Senken des unteren Verteilers dem Anheben und Senken des oberen Verteilers unterworfen ist, und wobei die Vorrichtung darüber hinaus eine Anschlagvorrichtung (118) umfasst, so dass während eines Absenkens des oberen und des unteren Verteilers, der untere Verteiler bei einer vorbestimmten Höhe anhält, die durch die Anschlagvorrichtung festgelegt ist, während der obere Verteiler sich weiter abwärts bewegen kann.

19. Vorrichtung zum gleichzeitigen Waschen einer Vielzahl von Näpfen in einer Napfplatte wie nach Anspruch 7, wobei die Abgaberohre (109) in einem Winkel aus der Vertikalen angeordnet sind und die daraus abgegebene Waschlösung in jeweilige Näpfe der Napfplatte eintritt, während gleichzeitig die Saugrohre (102) in die jeweiligen Näpfe der Napfplatte eintreten, um einen kontinuierlichen Überlaufwaschvorgang durchzuführen.

20. Vorrichtung zum gleichzeitigen Waschen einer Vielzahl von Näpfen in einer Napfplatte wie nach Anspruch 7, wobei die Abgaberohre in einem Winkel aus der Vertikalen angeordnet sind und die daraus abgegebene Waschlösung in jeweilige Näpfe der Napfplatte eintritt, während eine Fluidwirbelbewegung erzeugt wird.

21. Vorrichtung zum gleichzeitigen Waschen einer Vielzahl von Näpfen in einer Napfplatte wie nach Anspruch 19, wobei die Abgaberohre in einem Winkel aus der Vertikalen angeordnet sind und die daraus abgegebene Waschlösung so ausgeschleudert wird, dass sie auf die Seitenwände der jeweiligen Näpfe der Napfplatte auftrifft.

22. Vorrichtung zum gleichzeitigen Waschen einer Vielzahl von Näpfen in einer Napfplatte wie nach Anspruch 7, wobei Endabschnitte der Saugrohre (131) einen vergrößerten Durchmesser haben, wodurch ein sanfter Ansaugvorgang ermöglicht ist.

23. Vorrichtung zum gleichzeitigen Waschen einer Vielzahl von Näpfen in einer Napfplatte wie nach Anspruch 7, wobei die Führungseinrichtung darüber hinaus eine Schalteinrichtung umfasst, um die Abgabe- und Saugrohre in der horizontalen Ebene vorrücken zu lassen.

24. Vorrichtung zum gleichzeitigen Waschen einer Vielzahl von Näpfen in einer Napfplatte wie nach Anspruch 23, 96 Abgaberohre und 96 Saugrohre umfassend, die für eine 96-Well-Platte ausgelegt sind, und wobei die Schaltvorrichtung angeordnet ist, um die Abgaberohre und die Saugrohre vier Mal vorrücken zu lassen, um einen Waschvorgang an einer 384-Well-Platte durchzuführen, und acht Mal, um einen Waschvorgang an einer 1536-Well-Platte durchzuführen.

25. Vorrichtung zum gleichzeitigen Waschen einer Vielzahl von Näpfen in einer Napfplatte wie nach Anspruch 7, wobei die Führungseinrichtung darüber hinaus eine Schalteinrichtung umfasst, um die Napfplattenhalterung in der horizontalen Ebene vorrücken zu lassen.

26. Vorrichtung zum gleichzeitigen Waschen einer Vielzahl von Näpfen in einer Napfplatte wie nach Anspruch 25, wobei die Schaltvorrichtung angeordnet ist, um die Napfplattenhalterung vier Mal vorrücken zu lassen, um einen Waschvorgang an einer 384-Well-Platte durchzuführen, und acht Mal, um einen Waschvorgang an einer 1536-Well-Platte durchzuführen.

27. Vorrichtung zum gleichzeitigen Waschen einer Vielzahl von Näpfen in einer Napfplatte wie nach Anspruch 7, darüber hinaus eine Primerwanne (107) umfassend, in welche die Abgaberohre und Saugrohre abgesenkt werden können.

28. Vorrichtung zum gleichzeitigen Waschen einer Vielzahl von Näpfen in einer Napfplatte wie nach Anspruch 7, wobei die Abgaberohre (104) am Abgabeverteiler (103) drehbar gehaltert sind.

29. Verfahren zum gleichzeitigen Waschen einer Vielzahl von Näpfen (2) in einer Napfplatte (108) unter Verwendung einer Waschvorrichtung. die eine Napfplattenhaltetung zum Haltern einer abnehmbaren Napfplatte während eines Waschvorgangs umfasst, eine Vielzahl von Abgaberohren (104) zum Abgeben einer Waschlösung in die Näpfe, einen Abgaberohrhalterungsaufbau (103) zum Haltern der Abgaberohre, eine Vielzahl von Saugrohren (102) zum Absaugen der Waschlösung aus den Näpfen, und einen Saugrohrhalterungsaufbau (101) zum Haltern der Saugrohre, **gekennzeichnet durch** die folgenden Schritte:
den Abgaberohrhalterungsaufbau und den Saugrohrhalterungsaufbau gleichzeitig so über der Napfplattenhalterung zu positionieren, dass der Abgaberohrhalterungsaufbau oder der Saugrohrhalterungsaufbau, der einen oberen Rohrhalterungsaufbau bildet, über dem anderen Abgaberohrhalterungsaufbau oder Saugrohrhalterungsaufbau positioniert wird, wobei der andere einen unteren Rohrhalrerungsaufbau bildet,
den oberen Rohrhalterungsaufbau, den unteren Rohrhalterungsaufbau und/oder die Napfplattenhalterung vertikal so zu bewegen, dass die Abgaberohre nahe an die Näpfe herangebracht werden, um die Waschlösung (8) in jeweilige Näpfe der Napfplatte abzugeben, und die Saugrohre jeweils in die Näpfe einzubringen, um die Waschlösung aus den jeweiligen Näpfen der Napfplatte abzusaugen; und
die Abgaberohre und Saugrohre bezüglich der Napfplatte in einer ersten Richtung und einer zweiten Richtung horizontal zu bewegen, die sich im Hinblick auf die erste Richtung in einer horizontalen Ebene in einem Winkel befindet.

30. Verfahren nach Anspruch 29, darüber hinaus umfassend, die Saugrohre und Abgaberohre im Hinblick auf die Napfplatte unabhängig anzuheben und/oder zu senken.

31. Verfahren nach Anspruch 29 zum gleichzeitigen Waschen einer Vielzahl von Näpfen in einer Napfplatte, wobei der Schritt des Bewegens des oberen Rohrhalterungsaufbaus, des unteren Rohrhalterungsaufbaus und/oder der Napfplattenhalterung darüber hinaus umfasst, die Rohre, die vom oberen Rohrhalterungsaufbau gehaltert werden, durch den unteren Rohrhalrerungsaufbau laufen zu lassen.

32. Verfahren nach Anspruch 29 zum gleichzeitigen Waschen einer Vielzahl von Näpfen in einer Napfplatte, darüber hinaus den Schritt umfassend, den oberen Rohrhalterungsaufbau und den unteren Rohrhalterungsaufbau anzuheben und zu senken, und während eines Schritts des Absenkens des oberen Rohrhalterungsaufbaus und des unteren Rohhalterungsaufbaus den unteren Rohrhalterungsaufbau bei einer vorbestimmten Höhe anzuhalten, die durch eine Anschlagvorrichtung (118) festgelegt ist, während sich der obere Rohrhalterungsaufbau weiter abwärts bewegen kann.

33. Verfahren nach Anspruch 29 zum gleichzeitigen Waschen einer Vielzahl von Näpfen in einer Napfplatte, darüber hinaus den Schritt umfassend, die Waschlösung aus den Abgaberohren so abzugeben, dass die Waschlösung in einem Winkel auf jeweilige Seitenwände der Napfplatten auftrifft,

34. Verfahren nach Anspruch 29 zum gleichzeitigen Waschen einer Vielzahl von Näpfen in einer Napfplattc, darüber hinaus die Schritte umfassend, den Abgaberohrhalterungsaufbau und den Saugrohrhalterungsaufbau in der horizontalen Ebene mindestens einmal vorrücken zu lassen, um einen Waschvorgang an einer Napfplatte durchzuführen, die eine Anzahl von Näpfen aufweist, die größer ist als eine Anzahl von Abgaberohren der Waschvorrichtung.

35. Verfahren nach Anspruch 29 zum gleichzeitigen Waschen einer Vielzahl von Näpfen in einer Napfplatte, darüber hinaus die Schritte umfassend, die Napfplattenhalterung in der horizontalen Ebene mindestens einmal vorrücken zu lassen, um einen Waschvorgang an einer Napfplatte durchzuführen, die eine Anzahl von Näpfen aufweist, die größer ist als eine Anzahl von Abgaberohren der Waschvorrichtung.

36. Verfahren nach Anspruch 29 zum gleichzeitigen Waschen einer Vielzahl von Näpfen in einer Napfplatte, darüber hinaus die Schritte umfassend, die Abgaberohre und die Saugrohre in eine Primerwanne (107) abzusenken.

## Revendications

1. Appareil pour laver simultanément plusieurs puits (2) dans une plaque de puits (108), comprenant :
un support de plaque de puits (111) pour supporter une plaque de puits amovible pendant une opération de lavage,
plusieurs tuyaux d'alimentation (104) pour alimenter une solution de lavage dans les puits,
une structure de support de tuyaux d'alimentation (103) pour supporter lesdits tuyaux d'alimentation,
plusieurs tuyaux d'aspiration (102) pour évacuer la solution de lavage à partir des puits,
une structure de support de tuyaux d'aspiration (101) pour supporter lesdits tuyaux d'aspiration, et **caractérisé par**,
un mécanisme de guidage (128) arrangé pour, durant l'opération de lavage, positionner simultanément ladite structure de support de tuyaux d'alimentation et ladite structure de support de tuyaux d'aspiration sur le support de plaques de puits de telle sorte qu'une parmi ladite structure de support de tuyaux d'alimentation et ladite structure de support de tuyaux d'aspiration, définissant une structure de support de tuyaux supérieure, est positionnée au-dessus de l'autre parmi ladite structure de support de tuyaux d'alimentation et ladite structure de support de tuyaux d'aspiration, ladite autre structure définissant une structure de support de tuyaux inférieure ;
d'où il en résulte que
ledit mécanisme de guidage est également arrangé pour produire, pour lesdits tuyaux d'alimentation et lesdits tuyaux d'aspiration par rapport à ladite plaque de puits, un déplacement horizontal dans une première direction et une seconde direction faisant un angle par rapport à la première direction dans un plan horizontal, et un déplacement vertical.

2. Appareil selon la revendication 1, dans lequel ledit élément de guidage est également arrangé de sorte que lesdits tuyaux d'alimentation et lesdits tuyaux d'aspiration peuvent être indépendamment montés et/ou abaissés par rapport à ladite plaque de puits.

3. Appareil pour laver simultanément plusieurs puits dans une plaque de puits selon la revendication 1 ou la revendication 2, dans lequel ledit mécanisme de guidage comprend :
un premier mécanisme de guidage (105, 126) pouvant fonctionner pour monter et abaisser ladite structure de support de tuyaux d'alimentation par rapport audit support de plaques de puits pendant l'opération de lavage, et
un second mécanisme de guidage (106, 127) pouvant fonctionner pour monter et abaisser ladite structure de support de tuyaux d'aspiration par rapport audit support de plaques de puits indépendamment dudit premier mécanisme de guidage pendant l'opération de lavage.

4. Appareil selon la revendication 3, dans lequel ledit second mécanisme de guidage peut fonctionner pour monter et abaisser ladite structure de tuyaux d'aspiration indépendamment de ladite structure de tuyaux d'alimentation.

5. Appareil selon la revendication 1, dans lequel ladite structure de support inférieure comprend plusieurs ouvertures (110) à travers lesquelles des tuyaux connectés à ladite structure de support supérieure passent lorsque ladite structure de support supérieure est abaissée par rapport à ladite structure de support inférieure.

6. Appareil pour laver simultanément plusieurs puits dans une plaque de puits selon la revendication 1, dans lequel lesdits tuyaux d'alimentation sont disposés de manière à pénétrer dans les mêmes puits respectifs que lesdits tuyaux d'aspiration lorsque lesdits tuyaux d'alimentation et lesdits tuyaux d'aspiration sont abaissés vers la plaque de puits.

7. Appareil selon la revendication 1, dans lequel ladite structure de support de tuyaux d'alimentation est un collecteur d'alimentation et ladite structure de support d'aspiration est un collecteur d'aspiration et dans lequel un système de délivrance de fluide est connecté audit collecteur d'alimentation et un système d'évacuation de fluide est connecté audit collecteur d'aspiration.

8. Appareil selon la revendication 7, dans lequel ledit élément de guidage est également arrangé de sorte que ledit collecteur d'alimentation et ledit collecteur d'aspiration sont déplaçables indépendamment par rapport à ladite plaque de puits.

9. Appareil pour laver simultanément plusieurs puits dans une plaque de puits selon la revendication 7, dans lequel le mécanisme de guidage comprend :
un premier mécanisme de guidage (105, 126) pour monter et abaisser ledit collecteur d'alimentation par rapport audit support de plaques de puits, et
un second mécanisme de guidage (106, 127) pour monter et abaisser ledit collecteur d'aspiration par rapport audit support de plaques de puits indépendamment dudit premier mécanisme de guidage.

10. Appareil selon la revendication 9, dans lequel ledit second mécanisme de guidage peut fonctionner pour monter et abaisser ledit collecteur d'aspiration indépendamment dudit collecteur d'alimentation.

11. Appareil pour laver simultanément plusieurs puits (2) dans une plaque de puits (108) selon la revendication 9, dans lequel ledit premier mécanisme de guidage comprend un premier guide vertical (105) et un premier élément de couplage pour coupler ledit collecteur supérieur audit premier guide vertical, et dans lequel ledit second mécanisme de guidage comprend un second guide vertical (106) et un second élément de couplage pour coupler ledit collecteur inférieur audit second guide vertical, ledit second guide vertical étant supporté par ledit collecteur supérieur.

12. Appareil pour laver simultanément plusieurs puits dans une plaque de puits selon la revendication 7, dans lequel ledit collecteur d'alimentation est le collecteur supérieur et ledit collecteur d'aspiration est le collecteur inférieur.

13. Appareil pour laver simultanément plusieurs puits dans une plaque de puits selon la revendication 7, dans lequel ledit collecteur d'aspiration est le collecteur supérieur et ledit collecteur d'alimentation est le collecteur inférieur.

14. Appareil pour laver simultanément plusieurs puits dans une plaque de puits selon la revendication 7, dans lequel ledit collecteur inférieur comprend plusieurs ouvertures (110) à travers lesquelles des tuyaux collectés audit collecteur supérieur passent lorsque ledit collecteur supérieur est abaissé par rapport audit collecteur inférieur.

15. Appareil pour laver simultanément plusieurs puits dans une plaque de puits selon la revendication 14, dans lequel lesdits tuyaux connectés audit collecteur supérieur et passant à travers ledit collecteur inférieur sont disposés de manière à pénétrer dans les mêmes puits respectifs que les tuyaux collectés audit collecteur inférieur lorsque ledit collecteur supérieur et ledit collecteur inférieur sont abaissés vers la plaque de puits.

16. Appareil pour laver simultanément plusieurs puits dans une plaque de puits selon la revendication 15, dans lequel des parties d'extrémité d'au moins un parmi lesdits tuyaux d'alimentation (130) et lesdits tuyaux d'aspiration (129) pénétrant dans les puits présentent un diamètre réduit.

17. Appareil pour laver simultanément plusieurs puits dans une plaque de puits selon la revendication 7, comprenant en outre une unité de commande (113) pour commander indépendamment l'alimentation de la solution de lavage (8) de l'évacuation de la solution de lavage à partir des puits.

18. Appareil pour laver simultanément plusieurs puits dans une plaque de puits selon la revendication 7, dans lequel le fait de monter et d'abaisser ledit collecteur inférieur est asservi au fait de monter et d'abaisser ledit collecteur supérieur et ledit appareil comprend en outre un dispositif d'arrêt (118) de sorte que pendant l'abaissement des collecteurs supérieur et inférieur, ledit collecteur inférieur s'arrête à une hauteur prédéterminée fixée par le dispositif d'arrêt alors que ledit collecteur supérieur peut continuer de descendre.

19. Appareil pour laver simultanément plusieurs puits dans une plaque de puits selon la revendication 7, dans lequel lesdits tuyaux d'alimentation (109) sont disposés avec un angle par rapport à la verticale et la solution de lavage distribuée à partir de ces tuyaux pénètre dans des puits respectifs de la plaque de puits alors que lesdits tuyaux d'aspiration pénètrent simultanément dans les puits respectifs de la plaque de puits de manière à effectuer une opération de lavage par débordement continu.

20. Appareil pour laver simultanément plusieurs puits dans une plaque de puits selon la revendication 7, dans lequel lesdits tuyaux d'alimentation sont disposés avec un angle par rapport à la verticale et la solution de lavage distribuée à partir de ces tuyaux pénètre dans les puits respectifs de la plaque de puits tout en créant un mouvement de fluide tourbillonnant.

21. Appareil pour laver simultanément plusieurs puits dans une plaque de puits selon la revendication 19, dans lequel lesdits tuyaux d'alimentation sont disposés avec un angle par rapport à la verticale et la solution de lavage distribuée à partir de ces tuyaux est éjectée de manière à frapper les parois latérales des puits respectifs de la plaque de puits.

22. Appareil pour laver simultanément plusieurs puits dans une plaque de puits selon la revendication 7, dans lequel des parties d'extrémité desdits tuyaux d'aspiration (131) ont un diamètre agrandi, permettant ainsi une opération de lavage modéré.

23. Appareil pour laver simultanément plusieurs puits dans une plaque de puits selon la revendication 7, dans lequel ledit mécanisme de guidage comprend en outre un mécanisme d'indexation pour indexer lesdits tuyaux d'alimentation et d'aspiration dans un plan horizontal.

24. Appareil pour laver simultanément plusieurs puits dans une plaque de puits selon la revendication 23, comprenant 96 tuyaux d'alimentation et 96 tuyaux d'aspiration configurés pour une plaque à 96 puits, et dans lequel ledit mécanisme d'indexation est disposé pour indexer lesdits tuyaux d'alimentation et lesdits tuyaux d'aspiration quatre fois pour effectuer une opération de lavage sur un plateau à 384 puits et huit fois pour effectuer une opération de lavage sur un plateau à 1 536 puits.

25. Appareil pour laver simultanément plusieurs puits dans une plaque de puits selon la revendication 7, dans lequel ledit mécanisme de guidage comprend en outre un mécanisme d'indexation pour indexer ledit support de plaque de puits dans un plan horizontal.

26. Appareil pour laver simultanément plusieurs puits dans une plaque de puits selon la revendication 25, dans lequel ledit mécanisme d'indexation est disposé pour indexer ledit support de plaque de puits quatre fois pour effectuer une opération de lavage sur une plaque à 384 puits et huit fois pour effectuer une opération de lavage sur une plaque à 1 536 puits.

27. Appareil pour laver simultanément plusieurs puits dans une plaque de puits selon la revendication 7, comprenant en outre une cuve d'amorçage (107) dans laquelle lesdits tuyaux d'alimentation et lesdits tuyaux d'aspiration peuvent être abaissés.

28. Appareil pour laver simultanément plusieurs puits dans une plaque de puits selon la revendication 7, dans lequel lesdits tuyaux d'alimentation (104) sont supportés de manière rotative sur ledit collecteur d'alimentation (103).

29. Procédé pour laver simultanément plusieurs puits (2) dans une plaque de puits (108) en utilisant un appareil de lavage comprenant un support de plaque de puits pour supporter une plaque de puits amovible pendant une opération de lavage, plusieurs tuyaux d'alimentation (104) pour alimenter une solution de lavage dans les puits, une structure de support de tuyaux d'alimentation (103) pour supporter lesdits tuyaux d'alimentation, plusieurs tuyaux d'aspiration (102) pour évacuer la solution de lavage à partir des puits, et une structure de support de tuyaux d'aspiration (101) pour supporter lesdits tuyaux d'aspiration, **caractérisé par** les étapes de :
positionner simultanément ladite structure de support de tuyaux d'alimentation et ladite structure de support de tuyaux d'aspiration au-dessus du support de plaque de puits de telle sorte qu'une structure parmi ladite structure de support de tuyaux d'alimentation et ladite structure de support de tuyaux d'aspiration, définissant une structure de support de tuyaux supérieure, est positionnée au-dessus de l'autre parmi ladite structure de support de tuyaux d'alimentation et ladite structure de support de tuyaux d'aspiration, ladite autre structure définissant une structure de support de tuyaux inférieure,
déplacer verticalement au moins deux parmi ladite structure de support de tuyaux supérieure, ladite structure de tuyaux inférieure, et ledit support de plaque de puits de manière à amener lesdits tuyaux d'alimentation à proximité des puits pour alimenter la solution de lavage (8) dans des puits respectifs de la plaque de puits, et de manière à amener lesdits tuyaux d'aspiration respectivement dans les puits pour évacuer la solution de lavage à partir des puits respectifs de la plaque de puits ; et
déplacer horizontalement lesdits tuyaux d'alimentation et lesdits tuyaux d'aspiration, par rapport à ladite plaque de puits, dans une première direction et une seconde direction faisant un angle par rapport à la première direction dans un plan horizontal.

30. Procédé selon la revendication 29, comprenant en outre de monter et/ou d'abaisser lesdits tuyaux d'aspiration et lesdits tuyaux d'alimentation indépendamment de ladite plaque de puits.

31. Procédé pour laver simultanément plusieurs puits dans une plaque de puits selon la revendication 29, dans lequel ladite étape de déplacement d'au moins deux parmi ladite structure de support de tuyaux supérieure, ladite structure de tuyaux inférieure, et le support de plaque de puits, comprend en outre de passer lesdits tuyaux supportés par ladite structure de support de tuyaux supérieure à travers ladite structure de support de tuyaux inférieure.

32. Procédé pour laver simultanément plusieurs puits dans une plaque de puits selon la revendication 29, comprenant en outre l'étape de monter et d'abaisser ladite structure de support de tuyaux supérieure et ladite structure de support inférieure, et d'arrêter ladite structure de support de tuyaux inférieure à une hauteur prédéterminée fixée par un dispositif d'arrêt (118) pendant une étape d'abaissement de ladite structure de support de tuyaux supérieure et de ladite structure de support de tuyaux inférieure alors que ladite structure de support de tuyaux supérieure continue à descendre.

33. Procédé pour laver simultanément plusieurs puits dans une plaque de puits selon la revendication 29, comprenant en outre l'étape de distribuer la solution de lavage à partir desdits tuyaux d'alimentation de sorte que la solution de lavage frappe respectivement des parois latérales des plaques de puits avec un angle.

34. Procédé pour laver simultanément plusieurs puits dans une plaque de puits selon la revendication 29, comprenant en outre les étapes d'indexer dans un plan horizontal ladite structure de support de tuyaux d'alimentation et ladite structure de tuyaux d'aspiration au moins une fois de manière à effectuer une opération de lavage dans une plaque de puits ayant un nombre de puits plus grand qu'un nombre de tuyaux d'alimentation de l'appareil de lavage.

35. Procédé pour laver simultanément plusieurs puits dans une plaque de puits selon la revendication 29, comprenant en outre les étapes d'indexer dans un plan horizontal lesdits supports de plaques de puits au moins une fois de manière à effectuer une opération de lavage dans une plaque de puits qui a un nombre de puits plus grand qu'un nombre de tuyaux d'alimentation de l'appareil de lavage.

36. Procédé pour laver simultanément plusieurs puits dans une plaque de puits selon la revendication 29, comprenant en outre les étapes d'abaisser lesdits tuyaux d'alimentation et lesdits tuyaux d'aspiration dans une cuve d'amorçage (107).
